# EUROPEAN PATENT APPLICATION

(11) **EP 1 473 545 A2**
(43) Date of publication of application: **03.11.2004**
(21) Application number: 04018761.9
(22) Date of filing: 05.03.1998
(51) Int. Cl.: G01C 21/36

(54) **Vehicle navigation apparatus with voice output**

(30) Priority: 22.04.1997 JP 10470197
(62) Divisional of application: 98103949.8
(71) Applicant: MITSUBISHI DENKI KABUSHIKI KAISHA, Tokyo 100 (JP)
(72) Inventor: Kusama, Toshiki, Chiyoda-ku Tokyo 100 (JP); Kinoshita, Hidetoshi, Chiyoda-ku Tokyo 100 (JP)
(74) Representative: HOFFMANN - EITLE

(57) **Abstract**

A vehicle cruising information presenting apparatus has a course setting means 15 for setting a course through which a driver's vehicle is guided for cruising, a voice message producing means 14 for producing a voice message concerning a place at which the cruising direction of the driver's vehicle is changed, based on the information of the guided course, and a voice outputting means 19 for outputting the voice message produced by the voice message producing means 14, wherein the voice message includes information of the number of constructions which are located in the course to the place at which the cruising direction of the driver's vehicle is changed; or the voice message includes information of the kind of a construction located at the place at which the cruising direction of the driver's vehicle is changed, and information as to whether the construction is located above or below said place; or the voice message producing means changes the particulars of the voice message depending on a possibility that there is confusion between the place at which the cruising direction of the driver's vehicle is changed and another crossing point; or the voice outputting means 19 outputs a voice message concerning the place at which the cruising direction of the driver's vehicle is changed, the destination of the place "en route" when the driver's vehicle correctly cruises in the course, and the voice outputting means output a voice message concerning the destination or the place "en route" when the driver's vehicle misses the course.

## Description

### BACKGROUND OF THE INVENTION

### FIELD OF THE INVENTION

The present invention relates to a vehicle cruising information presenting apparatus for guiding a driver by means of voice.

### DISCUSSION OF BACKGROUND

There has been known a vehicle cruising information presenting apparatus which provides by means of voice to a driver the information of a turning direction or a landmark at or near a crossing at which the driver's vehicle is to be turned, in a course to a destination.

For example, Japanese Unexamined Patent Publication JP-A-7-63571 discloses a vehicle routing apparatus which operates to obtain evaluated values concerning landmarks such as traffic signals, crossings and so on, and guides the vehicle by means of voice or a display based on the evaluated values. Japanese Unexamined Patent Publication JP-A-7-294276 discloses a driver assisting apparatus which effects the guiding for a vehicle by means of voice wherein the guiding for a vehicle is conducted in response to levels of voice guiding selected by the driver.

However, the conventional vehicle cruising information presenting apparatus had the disadvantage as follows. Since the apparatus did not provide any information about a crossing or crossings located in the way to the crossing where the driver's vehicle was intended to turn, the driver might erroneously turn in a case that there was a crossing resembling to the intended crossing before the crossing where the driver's vehicle was intended to turn.

Further, when there was a high level road or a underground passage at the intended crossing, the positional relation of such construction to the crossing was not informed by voice. In particular, the driver was confused in finding the correct way at a crossing above which a high level road was contructed.

Further, when the driver's vehicle missed the intended course, there was provided no voice information. And, even when the driver's vehicle got near a destination, the driver had to operate the apparatus again to find the correct way.

### SUMMARY OF THE INVENTION

It is an object of the present invention to provide a vehicle cruising information presenting apparatus capable of guiding a driver by means of voice without causing any confusion of the driver.

In accordance with the present invention, there is provided a vehicle cruising information presenting apparatus comprising a course setting means for setting a course through which a driver's vehicle is guided for a destination, a voice message producing means for producing a voice message concerning a place at which the cruising direction of the driver's vehicle is changed, based on the information of the guided course, and a voice outputting means for outputting the voice message produced by the voice message producing means, wherein the voice message includes information of the number of constructions which are located in the cource to the place at which the cruising direction of the driver's vehicle is charged.

Further, in accordance with the present invention, there is provided a vehicle cruising information presenting apparatus comprising a course setting means for setting a course through which a driver's vehicle is guided for a destination, a voice message producing means for producing a voice message concerning a place at which the cruising direction of the driver's vehicle is changed, based on the information of the guided course, and a voice outputting means for outputting the voice message produced by the voice message producing means, wherein the voice message includes information of the kind of a construction located at the place at which the cruising direction of the driver's vehicle is changed, and information as to whether the construction is located above or below said place.

Further, in accordance with the present invention, there is provided a vehicle cruising information presenting apparatus comprising a course setting means for setting a course through which a driver's vehicle is guided for a destination, a voice message producing means for producing a voice message concerning a place at which the cruising direction of the driver's vehicle is charged, a destination or a place "en route", and a voice outputting means for outputting a voice message produced by the voice message producing means wherein the voice outputting means outputs a voice message concerning the place at which the cruising direction of the driver's vehicle is charged, the destination or the place en route when the driver's vehicle correctly cruises in the course, and outputs a voice message concerning the destination or the place "en route" when the driver's vehicle misses the course.

Further in accordance with the present invention, there is provided a vehicle cruising information presenting apparatus comprising a course setting means for setting a course through which a driver's vehicle is guided for a destination, a voice message producing means for producing a voice message concerning a place at which the cruising direction of the driver's vehicle is changed, based on the information of the guided course, and a voice outputting means for outputting the voice message produced by the voice message producing means, wherein the voice message producing means changes the particulars of the voice message depending on a possibility that there is confusion between the place at which the cruising direction of the driver's vehicle is changed and another crossing point.

### BRIEF DESCRIPTION OF THE DRAWINGS

Figure 1 is a block diagram showing the functional structure of the vehicle cruising information presenting apparatus according to Embodiment 1 of the present invention;
Figure 2 is a block diagram showing an example of the hard ware of the vehicle cruising information presenting apparatus according to Embodiment 1 of the present invention;
Figure 3 is a diagram explaining a function of Embodiment 1 of the present invention;
Figure 4 is a block diagram showing an embodiment of a a system control means in the vehicle cruising information presenting apparatus of Embodiment 1 of the present invention;
Figure 5 is a flow chart showing the operation of a crossing-construction-vertical-relation judging means in the vehicle cruising information presenting apparatus of Embodiment 1 of the present invention; and
Figures 6a to 6d are respectively diagrams showing the function of Embodiment 1 of the present invention.

### DESCRIPTION OF THE PREFERRED EMBODIMENTS

Detail description of preferred embodiments of the present invention will be described with reference to the drawings.

### Embodiment 1

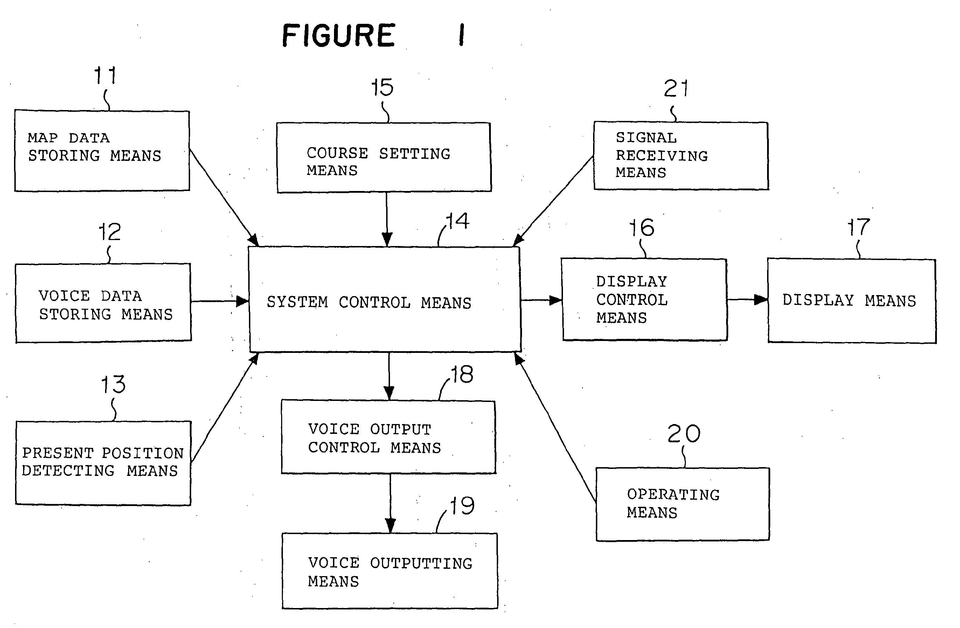

Figure 1 is a block diagram showing the functional structure of the vehicle cruising information presenting apparatus according to Embodiment 1 of the present invention. In Figure 1, reference numeral 11 designates a map data storing means which stores map data such as a road information on a road on which the driver's vehicle intends to cruise, numeral 12 designates a voice data storing means which stores voice messages for guiding the driver's vehicle based on the voice data. The voice messages are composed of standardized messages which are stored as several kinds of guiding information and word messages such as distances, place names and so on which are stored as specific values and names, and the voice messages are provided in combination of a standardized message and a word message or word messages.

Numeral 13 designates a present position detecting means for detecting the present position of the driver's vehicle based on data outputted from a GPS receiver and various kinds of sensor. Numeral 14 designates a system control means which reads out necessary data from the map data storing means 11 and the voice data storing means 12 and which takes the data of the present position of a vehicle from the present position detecting means 13 to thereby control the operation of the entire system of the vehicle cruising information presenting apparatus. The system control means 14 also functions as a voice message producing means. The system control means 14 comprises a microcomputer, a read-only memory (ROM), a random access memory (RAM) and so on.

Numeral 15 designates a course setting means which finds a course to a destination and stores data on the course, numeral 16 designates a display control means which generates display signals for a road map, a present position indicating mark, a mark of destination or the like in accordance with an instruction form the system control means 14, numeral 17 designates a display means for displaying the road map, the present position indicating mark, the mark of destination or the like in accordance with a display instruction signal from the display control means 16, numeral 18 designates a voice output control means for controlling an output of a voice message read out from the voice data storing means 12, and numeral 19 designates a voice outputting means for outputting a voice under the control of the voice output control means 18.

An Example of timing at which voice messages are outputted from the voice output control means 18 is as follows.
(1) The time at which the driver's vehicle reaches a crossing notifying distance (or within such distance).
(2) The time at which the driver' vehicle reaches a final crossing notifying distance (or within such distance).
(3) The time at which the driver's vehicle reaches near a place "en route".
(4) The time at which the driver's vehicle reaches an area around the destination.
(5) The time at which the driver's vehicle reaches an area around a ferry port.
(6) The time at which a manual operation is selected.

For instance, in a case of (1) or (2), voice announcement is so made that "turn to the left with a large curve at the crossing in front of the bridge" with respect to the crossing at which the driver's vehicle is intended to turn, whereby the driver can be guided to the correct road without any confusion about a turning direction at the crossing and about the crossing at which the driver's vehicle turns.

Further, in a case of (3), (4) or (5), a voice message such as "here is around the place" en route "(i.e., the place in the way to the destination) is provided with respect to a place "en route", a destination or a ferry port. Then, the driver feels easy in driving in the course of the place "en route", the destination or the ferry port, and he can be ready to find by eyes the place "en route" or the destination.

In a case of (6) wherein the driver requests a voice message by operating an operating means 20, a voice message is provided at the most suitable timing. For example, the same content as provided in the cases of (1) to (5) may be provided. Alternately, a voice message such as "it is 5 km to the crossing at which the drivers vehicle to be turned" or "it is 10 km to the place" en route" may be provided depending on situations.

Further, in any case of the above (1) to (5), the voice message concerning a distinctive point ahead of the driver's vehicle should be provided only once. Namely, the same voice message concerning the distinctive point should not be given repeatedly.

Further, if the driver's vehicle has missed a given course to the destination in the case of (1) or (2), any voice message is not provided. However, a voice message is provided in any case of (3) to (6) even when the driver's vehicle has missed the course. Accordingly, the voice message is provided even when the vehicle has missed the course as far as the vehicle is around the place "en route", the destination or the ferry port. Further, the driver can receive the voice message by the manual operation when the driver takes a wrong way.

As described above, in the case of (6), a voice message is provided even when the driver's vehicle has missed the course. However, such voice message is not provided if the content of the voice message by the manual operation is the same as the content of the voice message in the case of (1) or (2), (e.g., an instruction of turning to the right or the left at an intended crossing) and the content of the message is necessary only when the vehicle is in the correct course.

Numeral 20 designates an operating means operable by the driver, which is capable of outputting a voice message at a desirable time; inputting information concerning a destination at the time of setting a course, and switching a display from an image on navigation to an image on TV or vice versa, and numeral 21 designates a signal receiving means for receiving radio waves such as TV signals.

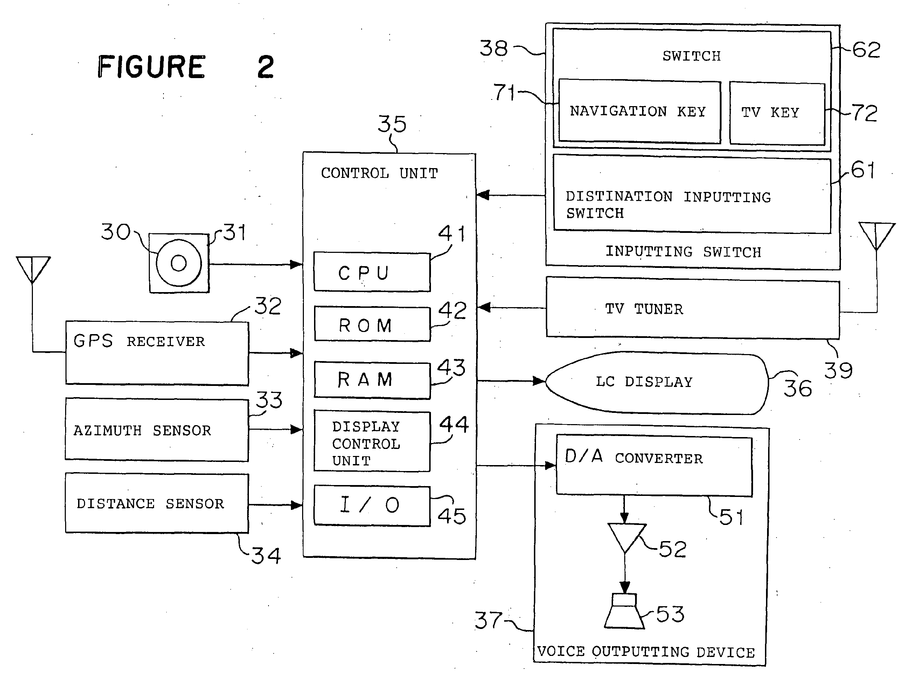

Figure 2 is a block diagram showing the hard ware of the vehicle cruising information presenting apparatus according to Embodiment 1 of the present invention. In Figure 2, reference numeral 30 designates a compact disc ROM (herein below, referred to as CD-ROM) which corresponds to the map data storing means 11 and the voice data storing means 12 in Figure 1, numeral 31 designates a CD-ROM driver for driving CD-ROM 30. Numeral 32 designates a GPS receiver for detecting the present position of the driver's vehicle by receiving electric waves from a GPS satellite, numeral 33 designates an azimuth sensor for detecting the azimuth of the vehicle, and numeral 34 designates a distance sensor for detecting a moving distance of the vehicle. These devices correspond to the present position detecting means 13 in Figure 1.

Numeral 35 designates a control unit for conducting various kinds of calculation and the control of the entire system of the apparatus. The system control means 14, the course setting means 15, the display control means 16 and the voice output control means 18 shown in Figure 1 are realized as the function of the control unit 35. Numeral 36 designates a liquid crystal display on which display data from the control unit 35 are displayed, the liquid crystal display corresponding to the display means 17 in Figure 1. Numeral 37 designates a voice outputting means for outputting a voice message, which corresponds to the voice outputting means 19 in Figure 1. Numeral 38 designates an input switch for providing an instruction to switch an image to be displayed on the display means 17 between an image for navigation and an image other than the navigation (e.g., an image for TV), and the operating means 20 in Figure 1 bears a part of the function of the inputting switch 38. Numeral 38designates a TV tuner including a TV antenna, which corresponds to the signal receiving means 21 in Figure 1.

The control unit 35 includes a central processing unit (CPU) 41, a ROM 42, a RAM 43, a display control section 44 which controls a display on the liquid crystal display 36 as the display means 17, and an input/output device (I/O) for inputting and outputting data of the control unit 35 to external devices. The voice outputting means 37 includes a digital·analog converter (a D/A converter) for converting a voice message based on digital signal data to analog signals, an amplifier 52 for amplifying the analog signals as voice message signals, and a speaker 53 for outputting the amplified voice message.

The input switch 38 includes a destination inputting switch 61 for inputting the data of a destination, a changing switch 62 for switching a display on the display means 17 to either a map image for indicating the present position which is used for vehicle navigation or an image other than the vehicle navigation (i.e., a TV display). The changing switch 62 includes a navigation key for selecting the image for vehicle navigation and a TV key for selecting the TV display. The changing switch 62 corresponds to the operating means 20 in Figure 1.

Detailed explanation will be made as to the voice message concerning the crossing at which the driver's vehicle is intended to turn, which is outputted from the voice outputting means 19.

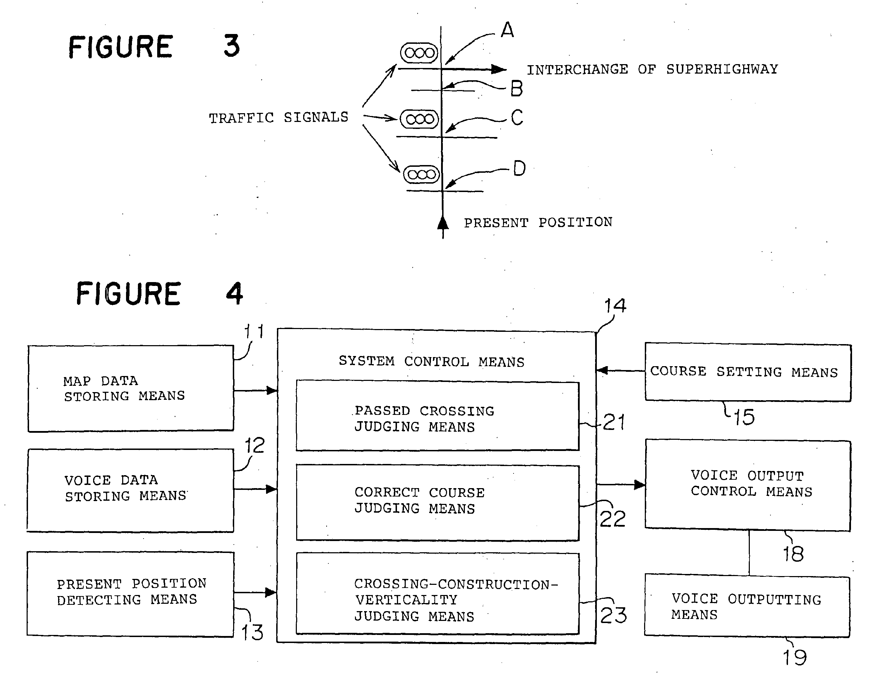

Figure 4 is a block diagram for explaining the system control means 14. The system control means 14 comprises a passed crossing judging means 21, a correct course judging means 22 and a crossing-construction-verticality judging means 23.

The passed crossing judging means 21 is so adapted to judge whether or not there is a crossing or crossings which have to be passed, on the way to the crossing at which the driver's vehicle had to be turned, and to provide a voice message including the crossing or the crossings to be passed. More detailed explanation will be made with reference to Figure 3 showing a positional relation between the course to be guided and crossings.

In Figure 3, a thick line indicates the course to be guided. Assuming that the driver's vehicle passes through a crossing D, a crossing C and a crossing B, and turn to right at a crossing A which is the intended crossing, to reach an interchange of superhighway. In this case, voice messages indicating "turning to the right at the crossing A" at the present position which is indicated by an allow mark are as follows, for example.
(1) "Turn to the right at the fourth crossing", and
(2) "Turn to the right at the crossing of the third traffic signal"

Concerning (1), the number of crossings between the present position of the driver's vehicle and the crossing A is calculated and the calculated number is informed to the driver. With this voice message, the driver can recognize the number of crossings located between the present position and the intended crossing. For example, in a situation that the crossing B and the crossing C resemble each other and there exists a convenience store at each of the crossings A and C, a voice message such as "turn to the right at the crossing where there is the fourth convenience store" is provided. With this message, the driver does not miss the intended crossing.

However, there may be a case that it is difficult to count the number of crossing roads because the width of a crossing road is too narrow to detect. In this case, the second (2) voice message is provided. Namely the number of crossings provided with a traffic signal, which are located between the present position of the driver's vehicle and the crossing A is counted, and the number of the crossings is announced to the driver. Thus, it is easy for the driver to detect the intended crossing.

Next, the correct course judging means 22 will be described.

As described before, description has been made as to the timings (1) to (6) for outputting the voice message wherein in the cases of (1) and (2), any voice message is not provided when the driver's vehicle has missed the course, whereas the cases of (3) to (6) a voice message is provided even when the driver's vehicle has missed the course. In the later cases, there is a useful voice message among the voice messages even when the driver's vehicle has missed the course. For example, a voice message such as "here is near the destination" or the like is helpful to the driver even when the driver's vehicle has missed the course.

Next, the crossing-construction-verticality judging means 23 will be described.

The crossing-construction-verticality judging means 23 is so adapted as to obtain from the map data the relation of verticality between the crossing and a construction, and to provide a voice message concerning the relation of verticality. As examples of constructions which are built or below a crossing, there are a high level footway, a railroad crossing, a high level road, an underground passage and so on.

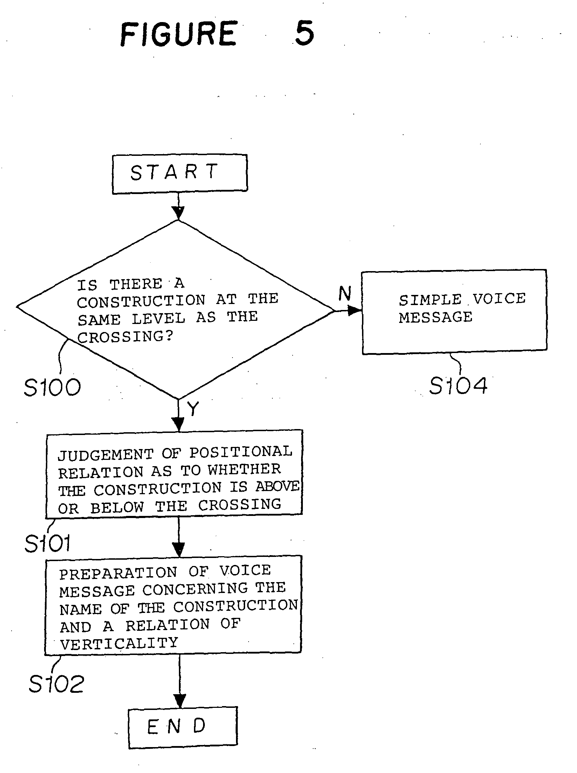

The operation of the crossing-construction-verticality judging means 23 will be described with reference to Figure 5 which is a flow chart indicating the operation.

At Step S100, detection is made as to whether or not there is a construction at the same position (the same attitude and longitude, i.e. the same XY coordinates) as the crossing. In a case of YES, the proceeding goes to Step S101. On the other hand, in a case of NO, the proceeding goes to Step S104. At Step S101, a vertical relation of a construction to the crossing as an object of guiding is judged. Namely, a judgment as to whether or not a construction built a the crossing is above or belowthe crossing is made. The judgment of the vertical relation can be conducted on the basis of the relation of verticality or the data of altitude which are previously stored in the map data. Then, at Step S102, a voice message including the vertical relation and the name of the construction located at the same position as the crossing detected at step S100, such as "turn to the right at the crossing below the superhighway" is prepared. At Step S104, a voice message such as "turn to the right soon" is provided because there is no distinctive construction above and below the crossing as an object for guiding.

### EMBODIMENT 2

In Embodiment 2, a more detailed voice message is provided in a case that there is a crossing near the crossing as an object for guiding, which is confusing in specifying the crossing an object for guiding. On the other hand, a simple voice message is provided when there is no confusing crossing.

The presence or the absence of a crossing which is confusing in specifying the crossing as an object for guiding can be determined according to the conditions as follows.
(Condition 1) A crossing which is in front of the crossing as an object for guiding and which is within the final crossing notifying distance
(Condition 2) A crossing which crosses a road having a larger width than the road connected to the crossing as an object for guiding
(Condition 3) A crossing which crosses a road having the same or resembling classification of road with respect to the road connected to the crossing as an object for guiding.

The condition 1 is determined in consideration that a crossing located very near the crossing as an object for guiding is confusing. Further, it is also determined in consideration that a crossing located between the present position of the drivers vehicle and the crossing for guiding at the time point of providing the voice message is confusing.

The condition 2 is determined in consideration that a crossing which crosses a road having a larger width than the road which crosses the crossing for guiding is confusing.

The condition 3 is determined in consideration that a crossing which crosses a road belonging to the same or resembling classification of road with respect to the road which crosses the crossing for guiding, is confusing.

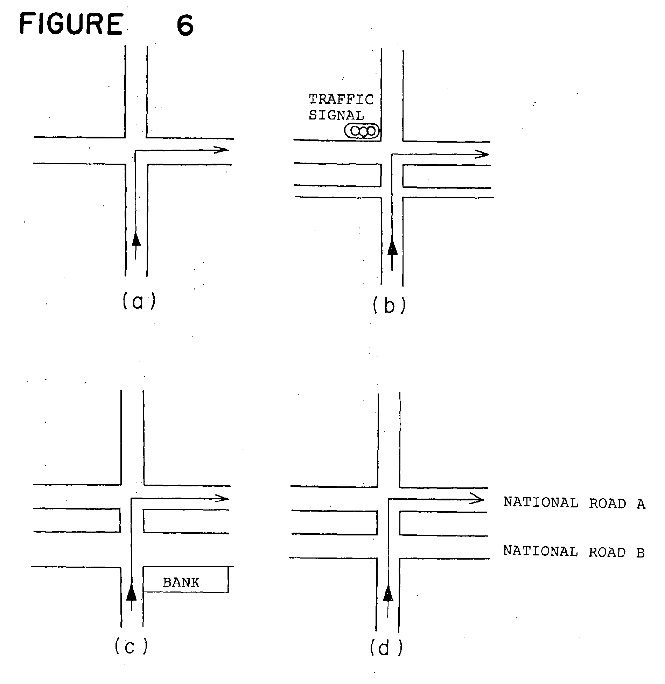

Above-mentioned conditions will be described with reference to Figure 6.

Figure 6a shows a state that there is no crossing near the crossing as an object for guiding. In this case, there is little possibility that the driver misses the course even though a simple voice message is provided. For example, a voice message "turn to the right at the next crossing" may be provided.

Figure 6b shows a case that there is a crossing which is near the crossing as an object for guiding and which is between the present position of the driver's vehicle and the crossing for guiding. In such state, a more detailed voice message is necessary. For example, a voice message "turn to the right at the crossing with a traffic signal" will be needed.

Figure 6c shows a case that there is a crossing which crosses a road having a larger width than the road which crosses the crossing as an object for guiding. In such state, the driver is apt to choose the wider road, and there is a high possibility of error. Accordingly, a furthermore detailed voice message is necessary. For example, a voice message "turn to the right at the crossing next to the crossing where there is a bank" or "turn to the right at the smaller crossing ahead of the next larger crossing" is needed.

Figure 6d shows a case that there is a crossing which crosses a road belonging to the same or resembling classification of road (e.g., a superhighway, an urban highway, a national road, a designated local road, a designated city road, a general local road, an agricultural road and so on) with respect to the road which communicates the crossing as an object for guiding. In such case, a detailed voice message is needed. For example, a voice message "turn to the right the national road A" or "turn to the right at the second national road" is needed. Since the width of roads is not always uniform but is sometimes narrowed or enlarged depending on locations, it is necessary to increase the capacity for storing the map data. However, for the data of the classification of road, an amount of data can be small. Accordingly, the memory of capacity can be reduced.

In Embodiment 2, the particulars of the voice messages can be changed depending on the presence or the absence of a crossing near the crossing as an object for guiding for which the driver may confuse, or a degree of confusion of the crossing, whereby the driver can receive suitable voice massages.

In embodiments 1 and 2, description has been made as to a crossing at which the cruising direction of the driver's vehicle is changed. However, the present invention is applicable to a three-forked crossing.

As described above, in the vehicle cruising information presenting apparatus of the present invention, a voice message including the number of constructions which are located before the place at which the cruising direction of the driver's vehicle is changed, is provided. Accordingly, the driver can correctly recognize the place at which the cruising direction is changed.

Further, in accordance with the present invention, a voice message including information of the kind of the construction located above or below the place at which the cruising direction of the driver's vehicle is changed and a voice instruction indicating a vertical relation of the construction, is provided. Accordingly, the driver can easily recognize the place.

Further, even when the driver's vehicle misses the course to be guided, a voice message about the destination or the place "en route" is provided. Accordingly, the driver can obtain information concerning the destination or the place "en route" even when the driver misses the correct course.

Further, a degree of particulars of voice information is changed depending on possibility of causing confusion between the place at which the cursing direction of the driver's vehicle is changed and another place which may cause confusion. Accordingly, a suitable voice information can be provided depending on situations.

Obviously, numerous modifications and variations of the present invention are possible in light of the above teachings. It is therefore to be understood that within the scope of the appended claims, the invention may be practiced otherwise than as specifically described herein.

## Claims

1. A vehicle cruising information presenting apparatus comprising a course setting means (15) for setting a course through which a driver's vehicle is guided for a destination, a voice message producing means (14) for producing a voice message concerning a place at which the cruising direction of the driver's vehicle is changed, based on the information of the guided course, and a voice outputting means (19) for outputting the voice message produced by the voice message producing means, wherein the voice message producing means (14) changes the particulars of the voice message depending on a possibility that there is confusion between the place at which the cruising direction of the driver's vehicle is changed and another crossing point.

2. A vehicle cruising information presenting apparatus comprising a course setting means (15) for setting a course through which a driver's vehicle is guided for a destination, a voice message producing means (14) for producing a voice message concerning a place at which the cruising direction of the driver's vehicle is changed, based on the information of the guided course, and a voice outputting means (19) for outputting the voice message produced by the voice message producing means (14) wherein the voice message includes information of the number of constructions which are located in the course to the place at which the cruising direction of the driver's vehicle is charged.

3. A vehicle cruising information presenting apparatus comprising a course setting means (15) for setting a course through which a driver's vehicle is guided for a destination, a voice message producing means (14) for producing a voice message concerning a place at which the cruising direction of the driver's vehicle is changed, based on the information of the guided course, and a voice outputting means (19) for outputting the voice message produced by the voice message producing means (14) wherein the voice message includes information of a kind of a construction located at the place at which the cruising direction of the driver's vehicle is changed, and information as to whether the construction is located above or below said place.

4. A vehicle cruising information presenting apparatus comprising a course setting means (15) for setting a course through which a driver's vehicle is guided for a destination, a voice message producing means (14) for producing a voice message concerning a place at which the cruising direction of the driver's vehicle is charged, a destination or a place "en route", and a voice outputting means (19) for outputting a voice message produced by the voice message producing means (14) wherein the voice outputting means (19) outputs a voice message concerning the place at which the cruising direction of the driver's vehicle is changed, the destination or the place "en route" when the driver's vehicle correctly cruises in the course, and outputs a voice message concerning the destination or the place "en route" when the driver's vehicle misses the course.

5. A vehicle cruising information presenting apparatus according to any one of Claims 1 to 4, wherein the voice message is in combination of a standardized message stored for each kind of guiding information and a word message stored as a specific value and a place name.

6. A vehicle cruising information presenting apparatus according to any one of Claims 1 to 4, wherein an operation means (20) is provided so that a manual operation is selected to obtain a voice message even when the driver's vehicle has missed the course.
